# EUROPÄISCHE PATENTSCHRIFT

(11) **EP 3 331 118 B1**
(45) Veröffentlichungstag und Bekanntmachung des Hinweises auf die Patenterteilung: **01.05.2019**
(21) Anmeldenummer: 17199507.9
(22) Anmeldetag: 01.11.2017
(51) Int. Cl.: H02J 3/34, H02M 5/293, H02M 5/297

(54) **ANLAGE ZUM ÜBERTRAGEN ELEKTRISCHER LEISTUNG**
SYSTEM FOR TRANSMITTING ELECTRIC POWER
INSTALLATION DE TRANSFERT D'ÉNERGIE ÉLECTRIQUE

(30) Priorität: 01.12.2016 DE 102016223944
(43) Veröffentlichungstag der Anmeldung: 06.06.2018
(73) Patentinhaber: Siemens Aktiengesellschaft, 80333 München (DE)
(72) Erfinder: Böhme, Daniel, 90480 Nürnberg (DE)

(56) Entgegenhaltungen:
- WO-A1-93/18566
- WO-A1-2009/015670
- WO-A2-2005/124959
- DE-A1- 10 035 157
- DE-A1-102005 043 422
- US-A1- 2013 343 111
- YUSHI MIURA ET AL: "Modular multilevel matrix converter for low frequency AC transmission", POWER ELECTRONICS AND DRIVE SYSTEMS (PEDS), 2013 IEEE 10TH INTERNATIONAL CONFERENCE ON, IEEE, 22 April 2013 (2013-04-22), pages 1079-1084, XP032420914, DOI: 10.1109/PEDS.2013.6527180 ISBN: 978-1-4673-1790-0

## Beschreibung

Die Erfindung betrifft eine Anlage zum Übertragen elektrischer Leistung zwischen einem ersten und einem zweiten Wechselspannungsnetz mit einem ersten Umrichter, der mit dem ersten Wechselspannungsnetz verbindbar ist, und einem zweiten Umrichter, der mit dem zweiten Wechselspannungsnetz verbindbar ist.

Eine solche Anlage ist beispielsweise aus der WO 2016/124234 A1 bekannt. Der erste Umrichter der bekanten Anlage ist dazu eingerichtet, eine erste Wechselspannung des ersten Wechselspannungsnetzes in eine Gleichspannung umzuwandeln und so eine DC-Leistung in eine die beiden Umrichter verbindende Gleichspannungsverbindung einzuspeisen. Die Gleichspannung wird mittels des zweiten Umrichters in eine zweite Wechselspannung umgewandelt und eine entsprechende AC-Leistung in das zweite Wechselspannungsnetz eingespeist. Bei der bekannten Anlage handelt es sich also um eine Hochspannungsgleichstrom-übertragungsanlage (HGÜ).

Die Übertragung elektrischer Leistung mittels Gleichstrom ist besonders effizient bei langen Übertragungsstrecken. Soll beispielsweise die elektrische Leistung aus einem Wechselspannungsnetz eines Windparks in ein Versorgungsnetz übertragen werden, so wird dies oftmals mittels HGÜ durchgeführt. Sowohl die Wechselspannung im Wechselspannungsnetz des Windparks als auch diejenige im Versorgungsnetz weisen dabei zumeist eine Grundfrequenz von 50 Hz oder 60 Hz auf.

Bedingt durch einen steigenden Energieverbrauch wird auch in Zukunft ein Ausbau der vorhandenen Energieübertragungsnetze notwendig sein. Insbesondere der Übertagung elektrischer Energie über lange Distanzen wird oftmals ein bestehendes Übertragungsnetz durch die oden beschriebene HGÜ ersetzt.

Die DE 100 35 157 A1 offenbart eine Anordnung zum Betreiben eines Drehstromübertragungssystems, bei dem die Frequenz mindestens einer Übertragungsstrecke des Drehstromübertragungssystems unter eine Nennfrequenz des Drehstromübertragungssystems abgesenkt ist.

Die WO 2005/124959 A2 offenbart eine Vorrichtung zur Übertragung elektrischer Energie zwischen einem Inselnetz und einem Versorgungsnetz. Auf einem Teil der Übertragungsstrecke wird die Übertragungsfrequenz um 55% herabgesetzt.

Ein weiteres Energieübertragungssystem ist aus der WO 2009/015670 A1 bekannt.

Der Einsatz eines modularen Matrix-Umrichters in einem low voltage ac transmission system ist aus dem Beitrag "Modularer Multilevel Matrix Converter for Low Frequency AC Trasmission" von Miura et al. bekannt.

Ein modularer Mehrstufenumrichter zum Umwandeln von Gleichin Wechselspannung oder umgekehrt ist aus der DE 10 2015 106 196 B3 bekannt.

Die Aufgabe der Erfindung besteht darin, eine Anlage der eingangs genannten Art vorzuschlagen, die möglichst kostengünstig und zuverlässig ist.

Die Aufgabe wird durch eine Anlage gemäß dem Patentanspruch 1 gelöst. Dabei verbindet eine mehrphasige Übertragungsleitung den ersten und den zweiten Umrichter, wobei der erste Umrichter dazu eingerichtet ist, eine erste Wechselspannung des ersten Wechselspannungsnetzes in eine Übertragungsspannung der Übertragungsleitung umzuwandeln, wobei eine Grundfrequenz der Übertragungsspannung niedriger als eine Grundfrequenz der ersten Wechselspannung ist. Der erste Umrichter kann mit anderen Worten die erste Wechselspannung, die an einem ersten Wechselspannungsanschluss des Umrichters anliegt, in die Übertragungsspannung umwandeln, wobei der erste Umrichter dazu geeignet ist, an einem zweiten Wechselspannungsanschluss, mittels dessen der Umrichter mit der Übertragungsleitung verbunden ist, die Übertragungsspannung zu erzeugen und somit die erste Wechselspannung an die Übertragunsleitung zu übertragen.

Erfindungsgemäß wird demnach vorgeschlagen, dass die Übertragung der elektrischen Leistung mittels einer Übertragungsspannung durchgeführt wird, die eine Wechselspannung einer niedrigen Grundfrequenz ist. Zum Umwandeln der höherfrequentien ersten Wechselspannung in die niedrigerfrequente Übertragungsspannung wird der erste Umrichter eingesetzt. Die Wechselspannungsnetze und die Übertragungsleitung können beispielsweise dreiphasig sein.

Ein Vorteil der erfindungsgemäßen Anlage ist es, dass die Anlage in die bereits vorhandene Netz-Infrastruktur integriert werden kann. Damit ist es insbesondere nicht mehr notwendig, neue HGÜ-Trassen zu errichten. Dies kann beispielsweise vorteilhaft zu einer höheren Akzeptanz für neue Energieübertragungsanlagen in der Bevölkerung führen.

Insbesondere können die beiden Umrichter der erfindungsgemäßen Anlage in bestehende Höchstspannungsnetze integriert werden. Die Umrichter erlauben dann, das Höchstspannungsnetz mit reduzierter Grundfrequenz zu betreiben. Mit einer sinkenden Grundfrequenz der Übertragung verschieben sich die elektrischen Eigenschaften der Übertragung hin zur Gleichstromtechnik. Dabei kommen zunehmend Vorteile dieser Technik zum Tragen. Neben den reinen elektrischen Parametern, wie zum Beispiel einem verringerten Blindwiderstand der Übertragungsleitung, wirken vorteilhaft auch die stabilisierenden hochdynamischen Regelungsmöglichkeiten der Umrichter.

Einige weitere Vorteile der erfindungsgemäßen Anlage sind im Folgenden aufgeführt:
Die reduzierte Grundfrequenz der Übertragungsspannung führt zu reduzierten elektrischen Verlusten aufgrund eines niedrigeren Blindwiderstandes der Übertragungsleitung.

Mittels der Umrichter können das erste und das zweite Wechselspannungsnetz vorteilhaft entkoppelt werden. Auf diese Weise ist eine schnelle und flexible Lastflussregelung ermöglicht.

Aufgrund der niedrigen Grundfrequenz ist die kritische maximale Länge der Übertragungsleitung größer.

Integration der Anlage in bestehende Netze erlaubt die Beibehaltung der bestehenden Primärtechnik, wie Transformatoren und Schalter. Dies erlaubt eine weitere Kostensenkung.

Mittels der beiden Umrichter können harmonische Oberwellen in den Wechselspannungsnetzen kompensiert werden. Auf diese Weise können vorteilhaft Netzanforderungen in angeschlossenen Subnetzen einfacher eingehalten werden.

Der Leistungsfaktor (power factor) in der Übertragungsleitung ist aufgrund der niedrigeren Grundfrequenz im Allgemeinen verbessert, so dass die Belastung der Primärkomponenten vorteilhaft sinkt.

Die Grundfrequenz kann dabei mit weiteren harmonischen Anteilen niedrigerer Amplitude überlagert sein. Vorteilhaft ist die grundfrequente Übertragungsspannung mit einer dritten Harmonischen überlagert. Eine solche Überlagerung erhöht den Effektivwert der Übertragungsspannung.

Vorzugsweise ist der erste Umrichter dazu eingerichtet, die Übertragungsspannung in die erste Wechselspannung des ersten Wechselspannungsnetzes umzuwandeln und eine entsprechende AC-Leistung in das erste Wechselspannungsnetz einzuspeisen. Dies erlaubt insbesondere eine Übertragung der elektrischen Leistung in beide Richtungen.

Erfindungsgemäß ist der zweite Umrichter dazu eingerichtet, eine Wechselspannung des zweiten Wechselspannungsnetzes in die Übertragungsspannung, oder umgekehrt, umzuwandeln, wobei die Grundfrequenz der Übertragungsspannung niedriger als die Frequenz der zweiten Wechselspannung ist.

Vorzugsweise sind der erste und/oder der zweite Umrichter mittels eines Transformators mit dem zugeordneten Wechselspannungsnetz verbindbar. Auf diese Weise kann eine Amplitudenanpassung der Übertragungsspannung an die beiden Wechselspannungsnetze erfolgen.

Bevorzugt beträgt eine Amplitude der Übertragungsspannung mindestens 100 kV, besonders bevorzugt mindestens 300 kV. Durch höhere Spannungsamplituden ergeben sich dem Fachmann bekannte Vorteile der Leistungsübertragung.

Auch die Wechselspannungsnetze können auf einem ähnlich hohen Spannungsniveau betrieben sein. Dementsprechend beträgt eine Amplitude der ersten und/oder der zweiten Wechselspannung vorteilhafterweise mindestens 100 kV. Es wird als vorteilhaft angesehen, wenn die Amplitude der Übertragungsspannung höher als die Amplituden der ersten und zweiten Wechselspannung ist.

Die Leistungsübertragung eignet sich besonders für lange Übertragungsstrecken. Zweckmäßigerweise beträgt die Länge der Übertragungsleitung mindestens 10 km, besonders bevorzugt mindestens 100 km.

Mittels der Erfindung ist es nicht nur möglich eine einzelne Übertragungsstrecke zwischen zwei Umrichtern als eine erfindungsgemäße Anlage auszubilden. Auch kann ein ganzes Subnetz mit niedriger Grundfrequenz betrieben werden. Gemäß einer Ausführungsform der Erfindung ist die Übertragungsleitung ein Teil eines Subnetzes, das eine Mehrzahl von Umrichtern verbindet. Mit anderen Worten ist eine Mehrzahl von Umrichtern bereitgestellt, wobei jeder der Umrichter mit einem zugeordneten Wechselspannungsnetz verbunden ist. Die Umrichter sind dabei über ein Subnetz verbunden, wobei das Subnetz eine Subnetzspannung aufweist, deren Grundfrequenz niedriger als die Grundfrequenz der Wechselspannungsnetze ist.

Grundsätzlich ist die Ausgestaltung bzw. die Topologie des ersten Umrichters im Rahmen der Erfindung beliebig. Der erste Umrichter weist zweckmäßigerweise eine erste und eine zweite Wechselspannungsseite auf sowie einen ersten mehrphasigen Wechselspannungsanschluss zum Verbinden mit dem ersten Wechselspannungsnetz und einen zweiten mehrphasigen Wechselspannungsanschluss zum Verbinden mit der Übertragungsleitung auf. Geeigneterweise umfasst der erste Umrichter ferner eine Regelungseinrichtung zum Regeln des Umrichters. Falls der erste Umrichter über ansteuerbare Halbleiterschalter verfügt, so übernimmt eine Ansteuerungseinheit, die in die Regelungseinrichtung integriert werden kann, zweckmäßigerweise die Ansteuerung der Halbleiterschalter. Zweckmäßigerweise umfasst der erste Umrichter eine Mehrzahl von Umrichterphasen. Die Anzahl der Umrichterphasen entspricht dabei der Anzahl der Phasen im ersten Wechselspannungsnetz bzw. der Übertragungsleitung.

Gemäß der Erfindung ist der erste Umrichter ein modularer Frequenzumrichter. Dazu umfasst der Umrichter mehrere Umrichterphasen, wobei jede Umrichterphasen eine Reihenschaltung zweipoliger Schaltmodule aufweist. Jedes der Schaltmodule weist wenigstens einen Halbleiterschalter sowie einen Energiespeicher auf, vorzugsweise in Form eines Kondensators. Die Schaltmodule umfassen hierbei eine Vollbrückenschaltung. Die Vollbrückenschaltung zeichnet sich dadurch aus, dass eine erste Reihenschaltung zweier Halbleiterschalteinheiten und eine zweite Reihenschaltung zweier Halbleiterschalteinheiten vorgesehen sind. Die beiden Reihenschaltungen sind zueinander parallel geschaltet. Parallel zu den Reihenschaltungen ist der Energiespeicher angeordnet. Jede Halbleiterschalteinheit umfasst einen ein- und abschaltbaren Halbleiterschalter, dem eine Freilaufdiode antiparallel geschaltet ist. Zwischen den beiden Halbleiterschalteinheiten der ersten Reihenschaltung ist eine erste Anschlussklemme des Schaltmodus, zwischen den beiden Halbleiterschalteinheiten der zweiten Reihenschaltung ist eine zweite Anschlussklemme angeordnet. Die Halbleiterschalter sind ein- und abschaltbar, wie beispielsweise IGBT oder IGCT. Die Halbleiterschalter der Vollbrückenschaltung sind derart miteinander verbunden und derart ansteuerbar, dass an den Anschlussklemmen eine am Energiespeicher abfallende Energiespeicherspannung, die Energiespeicherspannung mit entgegengesetzter Polarität oder eine Nullspannung erzeugbar ist. Gemäß einer besonders bevorzugten Variante der Erfindung umfasst der erste Umrichter drei Umrichterphasen, die in einer Dreieckschaltung miteinander verbunden sind. An Potenzialpunkten zwischen je zwei der Umrichterphasen sind Phasenansschlüsse zum Verbinden mit einem Wechselspannungsanschluss des Umrichters angeordnet. Jede Umrichterphase weist zwei Phasenzweige auf, die in Reihe miteinander verbunden sind. An Potenzialpunkten zwischen den Phasenzweigen einer Umrichterphase sind Zweiganschlüsse zum Verbinden mit einem weiteren Wechselspannungsanschluss des Umrichters angeordnet. Mittels des weiteren Wechselspannungsanschlusses kann der Umrichter beispielsweise mit der Übertragungsleitung verbunden werden. Jeder Phasenzweig weist eine Reihenschaltung der Schaltmodule auf. Mittels geeigneter Regelung und Ansteuerung der Schaltmodule kann eine eingangsseitig vorliegende Wechselspannung in eine beliebige ausgangsseitige Wechselspannung umgewandelt werden. Die maximale Amplitude der ausgangsseitigen Wechselspannung ist durch die Anzahl der Schaltmodule im Phasenzweig bestimmt. Mittels des modularen Frequenzumrichters ist eine besonders vorteilhafte stufenförmige Konverterspannung erzeugbar.

Alternativ kann der erste Umrichter eine gleichspannungsseitig verbundene Kombination eines Wechselrichters und eines Gleichrichters sein. Dabei können die Topologien des Wechselrichters und des Gleichrichters unterschiedlich sein. Beispielsweise kann der Gleichrichter und/oder der Wechselrichter ein modularer Mehrstufenumrichter (MMC) sein. Es ist aber auch denkbar, dass Thyristor-Umrichter eingesetzt werden.

Im Allgemeinen können der erste und der zweite Umrichter gleichartig aufgebaut sein. Zweckmäßigerweise ist auch der zweite Umrichter ein modularer Frequenzumrichter.

Gemäß einer Ausführungsvariante der Erfindung umfasst wenigstens einer der Umrichter Thyristorventile. Solche Umrichter sind besonders kostengünstig und robust.

Grundsätzlich ist jede niedrigere Frequenz der Übertragungsspannung dazu geeignet einige Vorteile der erfindungsgemäßen Anlage zu ermöglichen. Vorzugsweise ist jedoch die Grundfreqzenz der Übertragungsspannung höchstens 50 Hz, besonders bevorzugt höchstens 10 Hz.

Gemäß der Erfindung sind der erste und/oder der zweite Umrichter mittels wenigstens einer Überbrückungsschaltung überbrückbar. Zur Durchführung von Wartungsarbeiten an der Anlage können auf diese Weise einer oder beide Umrichter überbrückt werden, so dass die Übertragungsleitung ausfallfrei mit der höheren Grundfrequenz der Wechselspannungsnetze betrieben werden kann.

Vorzugsweise ist der erste Umrichter dazu eingerichtet, Blindleistung im ersten Wechselspannungsnetz zu regeln. Ebenso kann der zweite Umrichter dazu eingerichtet sein, Blindleistung im zweiten Wechselspannungsnetz zu regeln. Auf diese Weise können das erste und/oder das zweite Wechselspannungsnetz mittels der Umrichter vorteilhaft stabilisiert werden.

Die Erfindung betrifft ferner ein Verfahren zum Übertragen elektrischer Leistung zwischen einem ersten und einem zweiten Wechselspannungsnetz gemäß dem Patentanspruch 12.

Die Aufgabe der Erfindung ist es, ein solches Verfahren vorzuschlagen, dass möglichst kostengünstig realisierbar ist.

Die Aufgabe wird durch ein solches Verfahren gelöst, bei dem mittels eines ersten Umrichters, der mit dem ersten Wechselspannungsnetz verbunden ist, eine Wechselspannung des ersten Wechselspannungsnetzes in eine Übertragungsspannung einer niedrigeren Grundfrequenz umgewandelt und in eine mehrphasige Übertragungsleitung übertragen wird, wobei die Übertragungsleitung den ersten mit dem zweiten Umrichter verbindet, und mittels eines zweiten Umrichters, der mit dem zweiten Wechselspannungsnetz verbunden ist, die Übertragungsspannung in eine zweite Wechselspannung einer höheren Grundfrequenz umgewandelt und in das zweite Wechselspannungsnetz übertragen wird.

Die Vorteile des erfindungsgemäßen Verfahrens ergeben sich insbesondere aus den Vorteilen, die im Zusammenhang mit der erfindungsgemäßen Anlage beschrieben wurden.

Die Erfindung soll im Folgenden anhang von Figuren 1 bis 4 weiter erläutert werden.
Figur 1 zeigt ein erstes Ausführungsbeispiel einer erfindungsgemäßen Anlage in einer schematischen Darstellung;
Figur 2 zeigt ein zweites Ausführungsbeispiel einer erfindungsgemäßen Anlage in einer schematischen Darstellung;
Figur 3 zeigt ein Beispiel eines Umrichters für eine der Anlagen der Figuren 1 und 2 in einer schematischen Darstellung;
Figur 4 zeigt ein Beispiel eines Schaltmoduls für einen modularen Mehrstufenumrichter in einer schematischen Darstellung.

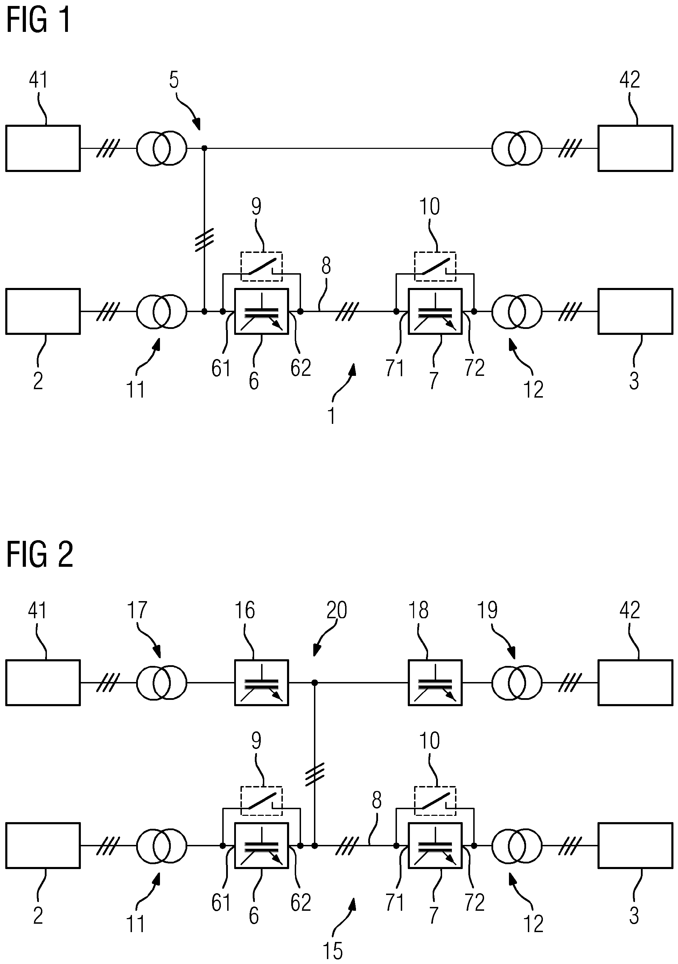

Im Einzelnen ist in Figur 1 eine Anlage 1 zum Übertragen elektrischer Leistung zwischen einem ersten Wechselspannungsnetz 2 und einem zweiten Wechselspannungsnetz 3 dargestellt. Das erste und das zweite Wechselspannungsnetz 2, 3 sind im dargestellten Ausführungsbeispiel dreiphasige Versorgungsnetze mit je einer Vielzahl von angeschlossenen Verbrauchern und/oder Energieerzeugern. Weitere Versorgungsnetze 41 und 42 sind mittels weiterer Wechselspannungsleitungen 5 mit dem ersten Wechselspannungsnetz 2 verbunden. Das erste Wechselspannungsnetz 2 weist eine erste Wechselspannung auf, deren Amplitude 110 kV und Grundfrequenz 50 Hz betragen. Entsprechend weist das zweite Wechselspannungsnetz 3 eine zweite Wechselspannung auf, deren Amplitude und Grundfrequenz ebenfalls 110 kV bzw. 50 Hz betragen.

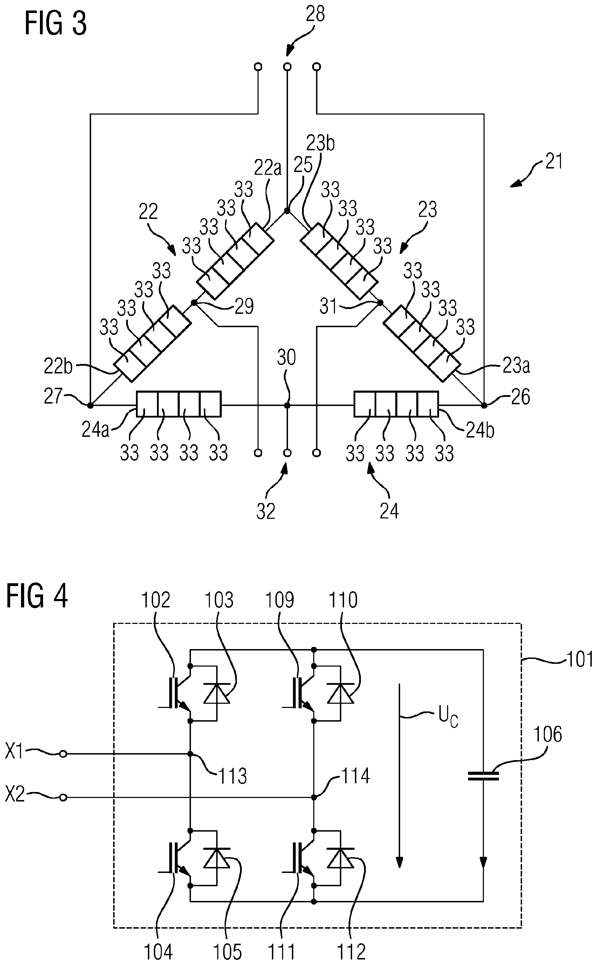

Die Anlage 1 umfasst einen ersten Umrichter 6, der mit dem ersten Wechselspannungsnetz 2 verbindbar ist, sowie einen zweiten Umrichter 7, der mit dem dritten Wechselspannungsnetz verbindbar ist. Der erste und der zweite Umrichter 6 bzw. 7 sind modulare Frequenzumrichter. Auf den Aufbau der beiden Umrichter wird im Zusammenhang mit Figur 3 näher eingegangen werden. Die beiden Umrichter 6 bzw. 7 sind mittels einer dreiphasigen Übertragungsleitung 8 miteinander verbunden.

In dem in Figur 1 dargestellten Ausführungsbeispiel sind die beiden Umrichter 6, 7 in eine bestehende Verbindung zwischen den Wechselspannungsnetzen 2, 3 integriert. Soll elektrische Leistung vom ersten Wechselspannungsnetz 2 in das zweite Wechselspannungsnetz 3 übertragen werden, so wird mittels des ersten Umrichters 7 die erste Wechselspannung des ersten Wechselspannungsnetzes 2 in eine Übertragungsspannung umgewandelt und in die Übertragungsleitung 8 eingespeist. Die Übertragungsspannung weist eine Grundfrequenz von 8 Hz und eine Amplitude von 380 kV auf. Mittels des zweiten Umrichters 7 wird die Übertragungsspannung in die zweite Wechselspannung umgewandelt und in das zweite Wechselspannungsnetz 3 eingespeist. Im Betrieb der Anlage 1 liegt an einem ersten Wechselspannungsanschluss 61 des ersten Umrichters 6 die erste Wechselspannung an. An einem zweiten Wechselspannungsanschluss 62 des ersten Umrichters 6 liegt die Übertragungsspannung an. Entsprechend liegt an einem ersten Wechselspannungsanschluss 71 des zweiten Umrichters 7 die Übertragungsspannung an. An einem zweiten Wechselspannungsanschluss 72 des zweiten Umrichters 7 liegt die zweite Wechselspannung an.

Der erste Umrichter 6 ist mittels einer ersten Überbrückungsschaltung 9 überbrückbar. Der zweite Umrichter 7 ist mittels einer zweiten Überbrückungsschaltung 10 überbrückbar. Der erste Umrichter 6 und der zweite Umrichter 7 sind beide mittels Transformatoren 11 bzw. 12 mit den ihnen zugeordneten Wechselspannungsnetzen 2 bzw. 3 verbunden.

Figur 2 zeigt eine erfindungsgemäße Anlage 15. Aus Gründen der Übersichtlichkeit wurden in den Figuren 1 und 2 gleiche und gleichartige Elemente mit gleichen Bezugszeichen versehen. Im Folgenden wird lediglich auf die Unterschiede der beiden Anlagen 1 und 15 näher eingegangen.

Im Unterschied zur Anlage 1 der Figur 1 sind in der Anlage 15 der Figur 2 ein dritter Umrichter 16 und ein vierter Umrichter 17 vorgesehen. Der dritte Umrichter 16 ist mittels eines Transformators 17 mit einem dritten Wechselspannungsnetz 41 und der vierte Umrichter 17 ist mittels eines Transformators 19 mit einem vierten Wechselspannungsnetz 42 verbunden. Die vier Umrichter 6, 7, 16 und 18 sind gleichartig als modulare Frequenzumrichter (vgl. Figur 3) ausgebildet. Auf diese Weise ist die Übertragungsleitung 8 ein Teil eines Subnetzes 20. Das gesamte Subnetz 20 kann mit einer Grundfrequenz betrieben werden, die kleiner als die Frequenz der Wechselspannungen in den vier angeschlossenen Wechselspannungsnetzen 2, 3, 41 und 42 ist.

In Figur 3 ist ein Umrichter 21 dargestellt. Der Umrichter 21 ist als einer der Umrichter der Anlagen 1 bzw. 15 der Figuren 1 und 2 einsetzbar. Der Umrichter 21 ist ein modularer Frequenzumrichter.

Der Umrichter 21 umfasst eine erste Umrichterphase 22, eine zweite Umrichterphase 23 und eine dritte Umrichterphase 24. Die drei Umrichterphasen 22-24 sind in einer Dreieckschaltung miteinander verbunden. Potenzialpunkte 25, 26 bzw. 27 zwischen je zwei der Umrichterphasen 22-24 sind mit einem ersten Wechselspannungsaschluss 28 des Umrichters 21 verbunden. Die erste Umrichterphase 22 weist einen ersten und einen zweiten Phasenzweig 22a bzw. 22b. Entsprechend umfassen auch die zweite Umrichterphase 23 einen ersten und einen zweiten Phasenzweig 23a, 23b, und die dritte Umrichterphase 24 einen ersten und einen zweiten Phasenzweig 24a, 24b auf. Potenzialpunkte 29, 30 bzw. 31 zwischen den Phasenzweigen 22a-b, 23ab, 24a-b, einer und derselben Umrichterphase 22-24 sind mit einem zweiten Wechselspannungsanschluss 32 des Umrichters 21 verbunden.

Jeder Phasenzweig 22a-b, 23a-b, 24a-b umfasst eine Reihenschaltung zweipoliger Schaltmodule 33, auf deren Aufbau in der nachfolgenden Figur 4 näher eingegangen wird. Die Anzahl der eingesetzten Schaltmodule 33 ist nicht auf die in Figur 3 dargestellte Anzahl von vier beschränkt und kann an die jeweilige Anwendung angepasst sein.

Ein Beispiel eines Schaltmoduls 33 in Form einer Vollbrückenschaltung 101 ist in Figur 4 schematisch dargestellt. Die Vollbrückenschaltung 101 weist einen ersten Halbleiterschalter 102 in Form eines IGBT, dem eine Freilaufdiode 103 antiparallel geschaltet ist sowie einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Ferner umfasst die Vollbrückenschaltung 108 einen dritten Halbleiterschalter 109 in Form eines IGBT, dem eine Freilaufdiode 110 antiparallel geschaltet ist sowie einen vierten Halbleiterschalter 111 in Form eines IGBT, dem eine Freilaufdiode 112 antiparallel geschaltet ist. Die Durchlassrichtung der beiden Halbleiterschalter 109 und 111 ist gleichgerichtet. Die Halbleiterschalter 102 und 104 mit ihnen zugeordneten Freilaufdioden 103, 105 bilden somit eine Reihenschaltung, die einer durch die Halbleiterschalter 109, 111 und die zugeordneten Freilaufdioden 110 und 112 gebildeten Reihenschaltung parallel geschaltet ist. Ein Energiespeicher in Form eines Leistungskondensators 106 ist parallel zu den beiden Reihenschaltungen angeordnet. Der erste Anschluss X1 ist an einem Potenzialpunkt 113 zwischen den Halbleiterschaltern 102, 104 angeordnet, der zweite Anschluss X2 ist an einem Potenzialpunkt 114 zwischen den Halbleiterschaltern 109, 111 angeordnet.

Durch eine geeignete Steuerung der Leistungshalbleiter 102, 104, 109 und 111 kann die an den Anschlüssen X1, X2 abfallende Spannung erzeugt werden, die der am Kondensator 106 abfallenden Spannung Uc, der am Kondensator 106 abfallenden Spannung jedoch mit entgegengesetzter Polarität oder der Spannung null entspricht.

## Patentansprüche

1. Anlage (1) zum Übertragen elektrischer Leistung zwischen einem ersten und einem zweiten Wechselspannungsnetz (2,3), die Anlage (1) umfassend
- einen ersten Umrichter (6), der mit dem ersten Wechselspannungsnetz (2) verbindbar ist,
- einen zweiten Umrichter (7), der mit dem zweiten Wechselspannungsnetz (3) verbindbar ist, und
- eine mehrphasige Übertragungsleitung (8), die den ersten und den zweiten Umrichter (6,7) verbindet, wobei der erste Umrichter (6) dazu eingerichtet ist, eine erste Wechselspannung des ersten Wechselspannungsnetzes (2) in eine Übertragungsspannung der Übertragungsleitung (8) umzuwandeln, wobei eine Grundfrequenz der Übertragungsspannung niedriger als eine Grundfrequenz der ersten Wechselspannung ist, und der zweite Umrichter (7) dazu eingerichtet ist, eine zweite Wechselspannung des zweiten Wechselspannungsnetzes (3) in die Übertragungsspannung, oder umgekehrt, umzuwandeln, wobei die Grundfrequenz der Übertragungsspannung niedriger als die Grundfrequenz der zweiten Wechselspannung ist,
**dadurch gekennzeichnet, dass** der erste Umrichter ein modularer Frequenzumrichter ist, wobei der erste Umrichter mehrere Umrichterphasen umfasst, wobei jede der Umrichterphasen eine Reihenschaltung zweipoliger Schaltmodule aufweist, wobei die Schaltmodule eine Vollbrückenschaltung umfassen, wobei die Anlage (1) eine Überbrückungsschaltung (9) umfasst, mittels der der erste Umrichter (6) überbrückbar ist.

2. Anlage (1) nach Anspruch 1, wobei der erste Umrichter (6) dazu eingerichtet ist, die Übertragungsspannung in die erste Wechselspannung des ersten Wechselspannungsnetzes (2) umzuwandeln.

3. Anlage (1) nach einem der vorangehenden Ansprüche, wobei der erste und/oder der zweite Umrichter (6,7) mittels eines Transformators (1,12) mit dem zugeordneten Wechselspannungsnetz (2,3) verbindbar sind.

4. Anlage (1) nach einem der vorangehenden Ansprüche, wobei eine Amplitude der Übertragungsspannung mindestens 100 kV beträgt.

5. Anlage (1) nach einem der vorangehenden Ansprüche, wobei eine Amplitude der ersten und/oder der zweiten Wechselspannung mindestens 100 kV beträgt.

6. Anlage (1) nach einem der vorangehenden Ansprüche, wobei die Länge der Übertragungsleitung (8) mindestens 10 km beträgt.

7. Anlage (15) nach einem der vorangehenden Ansprüche, wobei die Übertragungsleitung (8) ein Teil eines Subnetzes (20) ist, das eine Mehrzahl von Umrichtern (6,7,16,19) verbindet.

8. Anlage (1) nach Anspruch 1, wobei der zweite Umrichter (7) ein modularer Frequenzumrichter ist.

9. Anlage (1) nach einem der vorangehenden Ansprüche, wobei wenigstens einer der Umrichter (6,7) Thyristorventile umfasst.

10. Anlage (1) nach einem der vorangehenden Ansprüche, wobei die Grundfrequenz der Übertragungsspannung höchstens 50 Hz, besonders bevorzugt höchstens 10 Hz beträgt.

11. Anlage (1) nach einem der vorangehenden Ansprüche, wobei der erste Umrichter (6) dazu eingerichtet ist, Blindleistung im ersten Wechselspannungsnetz (2) zu regeln.

12. Verfahren zum Übertragen elektrischer Leistung zwischen einem ersten und einem zweiten Wechselspannungsnetz (2,3), bei dem
- mittels eines ersten Umrichters (6), der mit dem ersten Wechselspannungsnetz (2) verbunden ist, eine erste Wechselspannung des ersten Wechselspannungsnetzes (2) in eine Übertragungsspannung einer niedrigeren Grundfrequenz umgewandelt und in eine mehrphasige Übertragungsleitung (8) übertragen wird, wobei die Übertragungsleitung (8) den ersten mit einem zweiten Umrichter (7) verbindet, und
- mittels des zweiten Umrichters (7), der mit dem zweiten Wechselspannungsnetz (3) verbunden ist, die Übertragungsspannung in eine zweite Wechselspannung einer höheren Grundfrequenz umgewandelt und in das zweite Wechselspannungsnetz (3) übertragen wird, wobei der erste Umrichter ein modularer Frequenzumrichter ist, wobei der erste Umrichter mehrere Umrichterphasen umfasst, wobei jede der Umrichterphasen eine Reihenschaltung zweipoliger Schaltmodule aufweist, wobei die Schaltmodule eine Vollbrückenschaltung umfassen, wobei der erste und/oder der zweite Umrichter zur Durchführung von Wartungsarbeiten jeweils mittels wenigstens einer Überbrückungsschaltung überbrückt wird.

## Claims

1. System (1) for transmitting electrical power between a first and a second AC voltage network (2, 3), the system (1) comprising
- a first converter (6), which can be connected to the first AC voltage network (2),
- a second converter (7), which can be connected to the second AC voltage network (3), and
- a polyphase transmission line (8), which connects the first and the second converter (6, 7), wherein
the first converter (6) is configured to convert a first AC voltage of the first AC voltage network (2) to a transmission voltage of the transmission line (8), wherein a fundamental frequency of the transmission voltage is lower than a fundamental frequency of the first AC voltage, and the second converter (7) is configured to convert a second AC voltage of the second AC voltage network (3) to the transmission voltage, or vice versa, wherein the fundamental frequency of the transmission voltage is lower than the fundamental frequency of the second AC voltage,
**characterized in that**
the first converter is a modular frequency converter,
wherein the first converter comprises a plurality of converter phases, wherein each of the converter phases has a series circuit of two-pole switching modules, wherein the switching modules comprise a full-bridge circuit, wherein the system (1) comprises a bypass circuit (9), by means of which the first converter (6) can be bypassed.

2. System (1) according to Claim 1, wherein the first converter (6) is configured to convert the transmission voltage to the first AC voltage of the first AC voltage network (2).

3. System (1) according to either of the preceding claims, wherein the first and/or the second converter (6, 7) can be connected to the associated AC voltage network (2, 3) by means of a transformer (1, 12).

4. System (1) according to one of the preceding claims, wherein an amplitude of the transmission voltage is at least 100 kV.

5. System (1) according to one of the preceding claims, wherein an amplitude of the first and/or of the second AC voltage is at least 100 kV.

6. System (1) according to one of the preceding claims, wherein the length of the transmission line (8) is at least 10 km.

7. System (15) according to one of the preceding claims, wherein the transmission line (8) is a part of a subnetwork (20) that connects a plurality of converters (6, 7, 16, 19).

8. System (1) according to Claim 1, wherein the second converter (7) is a modular frequency converter.

9. System (1) according to one of the preceding claims, wherein at least one of the converters (6, 7) comprises thyristor valves.

10. System (1) according to one of the preceding claims, wherein the fundamental frequency of the transmission voltage is at most 50 Hz, particularly preferably at most 10 Hz.

11. System (1) according to one of the preceding claims, wherein the first converter (6) is configured to control reactive power in the first AC voltage network (2).

12. Method for transmitting electrical power between a first and a second AC voltage network (2, 3), in which
- a first AC voltage of the first AC voltage network (2) is converted to a transmission voltage of a lower fundamental frequency and is transmitted to a polyphase transmission line (8) by means of a first converter (6), which is connected to the first AC voltage network (2), wherein the transmission line (8) connects the first to a second converter (7), and
- the transmission voltage is converted to a second AC voltage of a higher fundamental frequency and is transmitted to the second AC voltage network (3) by means of the second converter (7), which is connected to the second AC voltage network (3), wherein the first converter is a modular frequency converter, wherein the first converter comprises a plurality of converter phases, wherein each of the converter phases has a series circuit of two-pole switching modules, wherein the switching modules comprise a full-bridge circuit, wherein the first and/or the second converter is bypassed in each case by means of at least one bypass circuit in order to carry out maintenance work.

## Revendications

1. Installation (1) de transport de puissance électrique entre un premier et un deuxième réseau (2, 3) à tension alternative, l'installation (1) comprenant
- un premier convertisseur (6), qui peut être connecté au premier réseau (2) à tension alternative,
- un deuxième convertisseur (7), qui peut être connecté au deuxième réseau (3) à tension alternative et
- une ligne (8) polyphasée de transport, qui connecte le premier et le deuxième convertisseur (6, 7), dans laquelle
le premier convertisseur (6) est conçu pour transformer une première tension alternative du premier réseau (2) à tension alternative en une tension de transport de la ligne (8)de transport, une fréquence fondamentale de la tension de transport étant plus basse qu'une fréquence fondamentale de la première tension alternative et le deuxième convertisseur (7) est conçu pour transformer une deuxième tension alternative du deuxième réseau (3) à tension alternative en la tension de transport ou inversement, la fréquence fondamentale de la tension de transport étant plus basse que la fréquence fondamentale de la deuxième tension alternative,
**caractérisée en ce que**
le premier convertisseur est un convertisseur de fréquence modulaire, le premier convertisseur comprenant plusieurs phases de convertisseur, chacune des phases de convertisseur ayant un montage série de modules d'interruption bipolaires, les modules d'interruption comprenant un montage en pont complet, dans laquelle l'installation (1) comprend un montage (9) de shuntage, au moyen duquel le premier convertisseur (6) peut être shunté.

2. Installation (1) suivant la revendication 1, dans laquelle le premier convertisseur (6) est conçu pour transformer la tension de transport en la première tension alternative du premier réseau (2) à tension alternative.

3. Installation (1) suivant l'une des revendications précédentes, dans laquelle le premier et/ou le deuxième convertisseurs (6, 7) peuvent être connectés au réseau (2, 3) à tension alternative associée, au moyen d'un transformateur (1, 12).

4. Installation (1) suivant l'une des revendications précédentes, dans laquelle une amplitude de la tension de transport s'élève à au moins 100 kV.

5. Installation (1) suivant l'une des revendications précédentes, dans laquelle une amplitude de la première et/ou de la deuxième tensions alternatives s'élève à au moins 100 kV.

6. Installation (1) suivant l'une des revendications précédentes, dans laquelle la longueur de la ligne (8) de transport est d'au moins 10 km.

7. Installation (1) suivant l'une des revendications précédentes, dans laquelle la ligne (8) de transport est une partie d'un sous-réseau (20), qui connecte une pluralité de convertisseurs (6, 7, 16, 19).

8. Installation (1) suivant la revendication 1, dans laquelle le deuxième convertisseur (7) est un convertisseur de fréquence modulaire.

9. Installation (1) suivant l'une des revendications précédentes, dans laquelle au moins l'un des convertisseurs (6, 7) comprend des soupapes à thyristor.

10. Installation (1) suivant l'une des revendications précédentes, dans laquelle la fréquence fondamentale de la tension de transport est au plus de 50 Hz, en particulier de manière préférée, au plus de 10 Hz.

11. Installation (1) suivant l'une des revendications précédentes, dans laquelle le premier convertisseur (6) est conçu pour réguler la puissance réactive dans le premier réseau (2) de tension alternative.

12. Procédé de transport de puissance électrique entre un premier et un deuxième réseau (2, 3) à tension alternative, dans lequel
- au moyen d'un premier convertisseur (6), qui est connecté au premier réseau (2) à tension alternative, on transforme une première tension alternative du premier réseau (2) à tension alternative en une tension de transport d'une fréquence fondamentale plus basse et on la transfère dans une ligne (8) de transport polyphasée, dans lequel la ligne (8) de transport connecte le premier convertisseur à un deuxième convertisseur (7) et
- au moyen du deuxième convertisseur (7), qui est connecté au deuxième réseau (3) à tension alternative, on transforme la tension de transport en une deuxième tension alternative de fréquence fondamentale plus haute et on la transfère dans le deuxième réseau (3) à tension alternative,
dans lequel le premier convertisseur est un convertisseur de fréquence modulaire, le premier convertisseur comprenant plusieurs phases de convertisseur, chacune des phases de convertisseur ayant un montage série de modules d'interruption bipolaires, les modules d'interruption comprenant un montage en pont complet, dans lequel on shunte le premier et/ou le deuxième convertisseurs pour effectuer des travaux d'entretien, respectivement, au moyen d'au moins un montage de shuntage.
